# EUROPEAN PATENT APPLICATION

(11) **EP 4 712 317 A1**
(43) Date of publication of application: **18.03.2026**
(21) Application number: 24818751.0
(22) Date of filing: 07.06.2024
(51) Int. Cl.: H02K 7/14, H02K 7/116, H02K 7/108, F16K 31/04

(54) **ELECTRIC DRIVE SYSTEM AND FLUID CONTROL SYSTEM**

(30) Priority: 08.06.2023 CN 202310678553; 08.06.2023 CN 202321461695 U
(71) Applicant: Jiangsu Leili Motor Co., LTD., Changzhou, Jiangsu 213011 (CN)
(72) Inventor: ZHANG, Qin, Changzhou, Jiangsu 213011 (CN); WANG, Lixiang, Changzhou, Jiangsu 213011 (CN); FENG, Yongxin, Changzhou, Jiangsu 213011 (CN); JIANG, Tao, Changzhou, Jiangsu 213011 (CN)
(74) Representative: EIP
(86) International application number: PCT/CN2024/097888
(87) International publication number: WO 2024/251220

(57) **Abstract**

Provided in the present disclosure is an electric drive system, comprising: a motor assembly, the motor assembly comprising a magnetic rotor, a coil assembly, an upper polar plate, a lower polar plate, and, arranged between the upper polar plate and the lower polar plate and formed from a non-magnetic conductive material, an upper magnetic isolation plate and a lower magnetic isolation plate; a power train, comprising a clutch gear train and a transmission gear train, the clutch gear train comprising a clutch gear piece and a clutch gear, the clutch gear piece being configured to be associated with the magnetic rotor so as to rotate when the magnetic rotor rotates, the clutch gear being configured to be capable of moving between an extension position and a retraction position, the clutch gear at the extension position being engaged with the clutch gear piece, the clutch gear at the retraction position being separated from the clutch gear piece, and the transmission gear train comprising an input gear configured to be meshed with the clutch gear and an intermediate output component configured to output power; and a power output assembly, coupled to the intermediate output component. The present disclosure also relates to a fluid control system.

## Description

### TECHNICAL FIELD

The present disclosure relates to the field of electric driving, and more particularly to an electric drive system and a fluid control system including such an electric drive system.

### BACKGROUND

Fluid control systems typically include valves for controlling the flow of fluid and electric drive systems for electrically controlling the valves. More specifically, a motor is often used to drive a dial to pull the valve open, while the fluid control system may include an elastic return member for the dial to allow the valve to restore to close when the motor is de-energized. Alternatively, the valve can also restore to close due to its own weight. When the motor is energized, it drives the dial against the elastic return member or the self-weight of the valve so that the valve opens to supply water or gas; after the motor is de-energized, the valve is automatically closed by the elastic return member or the self-weight of the valve to stop the water or gas supply.

Hysteresis motors are currently commonly used to drive the opening and closing of valves. However, when a hysteresis motor is de-energized, its rotor cannot be completely demagnetized instantaneously, and there will be residual magnetism, which will create resistance when the valve restores to close. Superimposed by the meshing resistance of the motor's reduction gear transmission system, the valve cannot be closed quickly. If the amount of residual magnetism is high, the valve closes slowly or even fails to close normally, which will lead to water leakage in the case of water supply, and the inability to accurately control the flow rate of the supply gas in the case of gas supply, resulting in issues such as poor system performance and user experience. In addition, the hysteresis loops of the hysteresis motors are generally made of iron-chromium-cobalt, which is expensive, resulting in prohibitive costs for the entire motor.

There remains a need for an improved electric drive system that at least partially addresses the problems of the existing art.

### SUMMARY

To this end, according to one aspect of the present disclosure, an electric drive system is proposed, comprising:
a motor assembly comprising a motor housing, the motor assembly further comprising, disposed within the motor housing:
   a rotatable magnetic rotor;
   an upper pole plate provided with a plurality of upper pole claws;
   a lower pole plate provided with a plurality of lower pole claws;
   an upper magnetic isolation plate formed of a non-magnetic permeable material and disposed adjacent to the upper pole plate and between the upper pole plate and the lower pole plate;
   a lower magnetic isolation plate formed of a non-magnetic permeable material and disposed adjacent to the lower pole plate and between the upper pole plate and the lower pole plate;
   a coil assembly disposed between the upper pole plate and the lower pole plate;
a powertrain comprising:
   a clutch gear train comprising a clutch disc and a clutch gear, the clutch disc being arranged to be associated with the magnetic rotor to be able to rotate when the magnetic rotor rotates, the clutch gear being configured to be movable between an extended position and a retracted position; wherein, in the extended position, the clutch gear is engaged with the clutch disc and, in the retracted position, the clutch gear is disengaged from the clutch disc;
   a transmission gear train comprising an input gear arranged to mesh with the clutch gear and an intermediate output member configured for outputting power; and a power output assembly coupled with the intermediate output member.

The proposed electric drive system of the present disclosure may include, according to different embodiments, one or more of the following further developments.

In some embodiments, at least a portion of the transmission gear train and the clutch gear train is disposed within the motor housing.

In some embodiments, the magnetic rotor comprises a rotor gear shaft, and the clutch disc is configured to mesh with the rotor gear shaft.

In some embodiments, the motor housing comprises a main housing and a cover, and the motor assembly further comprises a fixing plate disposed in the motor housing, the fixing plate being configured to support the transmission gear train and the clutch gear train together with the cover, and the transmission gear train and the clutch gear train have a clearance with the fixing plate and with the cover, and the main housing comprises a positioning member configured to position the fixing plate.

In some embodiments, the positioning member comprises a plurality of protrusions provided on a peripheral wall of the main housing, and respective upper ends of the plurality of protrusions are on a same plane parallel to the top face of the main housing.

In some embodiments, the plurality of protrusions protrude from the peripheral wall of the main housing toward an interior of the main housing.

In some embodiments, the upper pole plate is placed on the plurality of protrusions and abuts the respective upper ends of the plurality of protrusions, and the fixing plate is disposed on a side of the upper pole plate opposite to the upper magnetic isolation plate.

In some embodiments, the upper magnetic isolation plate is configured to adhere to the upper pole plate.

In some embodiments, the fixing plate is provided with a plurality of support shafts, and the plurality of support shafts are configured to support the transmission gear train.

In some embodiments, the electric drive system further comprises a receiving box, the receiving box comprises: a box body, the box body comprising a box body outer shell made of metal material and a liner disposed inside the box body outer shell and made of insulating material; and a box cover configured to cover an open end of the box body, the box cover comprising a box cover outer shell made of metal material and a lining cover disposed inside the box cover outer shell and made of insulating material.

In some embodiments, the receiving box is configured to house at least a portion of the power output assembly.

In some embodiments, the powertrain comprises an electromagnet assembly comprising a movable core configured to move the clutch gear from the retracted position to the extended position upon energization of the electromagnet assembly.

In some embodiments, the clutch gear train further comprises an elastic return member configured to actuate return of the clutch gear from the extended position to the retracted position upon de-energization of the electromagnet assembly.

In some embodiments, the first axial end face of the clutch disc is opposite to the first mating axial end face of the clutch gear, on the first axial end face are provided a first meshing tooth, and on the first mating axial end face are provided a second meshing tooth capable of meshing with the first meshing tooth.

In some embodiments, the electric drive system comprises a circuit board assembly housed in the receiving box, the circuit board assembly configured to simultaneously transmit power to the motor assembly and the electromagnet assembly.

In some embodiments, the electromagnet assembly is housed in the receiving box.

In some embodiments, the box body is coupled with the cover of the motor housing; the outer surface of the cover is provided with first flange structures protruding outwardly, and a bottom of the box body is provided with first receiving slots, each first receiving slot being configured to receive a corresponding first flange structure; and/or the bottom of the box body is provided with second flange structures protruding outwardly, and the cover is provided with second receiving slots, each second receiving slot being configured to receive a corresponding second flange structure.

In some embodiments, a bottom of the box body outer shell is provided with a cutout, and a bottom of the liner is provided with an axially extending supporting structure passing through the cutout, the axially extending supporting structure configured to abut an outer surface of the cover.

In some embodiments, the cover is provided with a first relief hole corresponding to the clutch gear, and the bottom of the liner is provided with a limiting structure for the clutch gear.

In some embodiments, relief holes for the intermediate output member to pass through are provided in the cover and in the respective bottoms of the box body outer shell and the liner.

In some embodiments, the upper magnetic isolation plate and the lower magnetic isolation plate are offset at an offset angle α in the circumferential direction, and the offset angle α satisfies α = 360°/n/2, where n is the number of pole pairs of the motor assembly.

In some embodiments, the upper magnetic isolation plate and the lower magnetic isolation plate are configured to be consistent with each other in shape.

In some embodiments, the lower pole plate is a bottom plate of the main housing of the motor housing, and the lower magnetic isolation plate is disposed adhering to the bottom plate.

In some embodiments, the electric drive system further comprises a damping mechanism comprising a damping gear arranged in mesh with the clutch gear and a damping block disposed on the damping gear.

In some embodiments, the damping block is axially stacked over the damping gear, the damping block comprising a main body portion configured to be coupled with the damping gear via a shaft and two circumferentially extending damping arms, each damping arm being connected at one circumferential end with the main body portion.

In some embodiments, the two damping arms are arranged centrally symmetrically with respect to a center of the shaft.

In some embodiments, the bottom of the liner is provided with an accommodation cavity for receiving the damping block.

In some embodiments, the coil assembly is disposed around the magnetic rotor and comprises a bobbin and a winding disposed on the bobbin, the bobbin is provided with a terminal block, and the terminal block is provided with two pin slots; the electric drive system further comprises: a circuit board assembly located outside the motor housing and configured to power the winding; two pins, each pin configured to be inserted into a corresponding pin slot, each pin comprising a connecting end for electrical connection with the coil assembly and a terminating end for termination to the circuit board assembly; and a sheath configured to cooperate with the terminal block to surround at least a portion of the pins.

In some embodiments, each pin is configured to have two bending portions, such that the pin has a short segment, a long segment, and a connecting segment connecting the short segment and the long segment, the short segment comprises the connecting end, and the long segment comprises the terminating end; each pin slot is configured to have a short segment receiving portion, a long segment receiving portion and a connecting receiving portion connecting the short segment receiving portion and the long segment receiving portion, and a first partition wall is provided between the short segment receiving portion and the long segment receiving portion; wherein the short segment receiving portion is configured to receive the short segment, the long segment receiving portion is configured to receive the long segment, and the connecting receiving portion is configured to receive the connecting segment.

In some embodiments, the motor housing comprises a cover; the sheath is provided with: a circumferential surrounding portion configured to surround the short segment and a portion of the long segment of the two pins, and the circumferential surrounding portion is provided with a mounting surface for abutting the upper end face of the terminal block; and a long segment guiding portion configured to communicate with the circumferential surrounding portion and comprising two guide holes spaced apart from each other for receiving a portion of the long segments respectively; wherein the long segment guiding portion is configured to extend out of the cover through a cutout in the cover.

In some embodiments, the circumferential surrounding portion is provided with a skirt surrounding at least an upper portion of the terminal block; and/or the sheath further comprises a partition wall extending from a lower portion of the radially outer side wall of the circumferential surrounding portion, the partition wall and the radially outer side wall being configured to abut against an inner side of the motor housing; and/or the bobbin comprises a first annular end plate and a second annular end plate axially spaced apart, the terminal block being disposed at a peripheral portion of the first annular end plate such that the terminal block is within a circumferential profile of the first annular end plate.

In some embodiments, the electric drive system further comprises a receiving box in which the circuit board assembly is housed; the receiving box comprises a box body and a box cover configured to cover an open end of the box body; the box body is connected to the cover of the motor housing, and the box body is provided with a wire exit portion, the wire exit portion is configured to receive an upper end of the long segment guiding portion of the sheath, and the terminating end is arranged to extend out of the wire exit portion.

In some embodiments, the wire exit portion comprises a partition rib configured to divide the wire exit portion into two wire exit holes, and each wire exit hole corresponds to a corresponding guide hole.

According to another aspect of the present disclosure, a fluid control system is proposed, which comprises a valve and an electric drive system as described above for driving the valve.

### BRIEF DESCRIPTION OF DRAWINGS

In order to explain the technical solutions of the embodiments of the present disclosure more clearly, the drawings that need to be used for the embodiments will be briefly introduced below. It should be understood that the following drawings only show certain embodiments of the present disclosure and therefore should not be regarded as a limitation on the scope. For those of ordinary skills in the art, other relevant drawings can also be obtained based on these drawings without exerting creative efforts. In the drawings:
Fig. 1 is a perspective exploded schematic view of an electric drive system according to an embodiment of the present disclosure;
Fig. 2 is a perspective exploded schematic view of a motor assembly of the electric drive system according to an embodiment of the present disclosure;
Fig. 3 is a perspective schematic view of an upper pole plate of the motor assembly according to an embodiment;
Fig. 4 is a perspective schematic view of an upper magnetic isolation plate of the motor assembly according to an embodiment;
Fig. 5 is a perspective schematic view of a lower magnetic isolation plate of the motor assembly according to an embodiment;
Fig. 6 is a perspective schematic view of a main housing of a motor housing of the motor assembly according to an embodiment, wherein a plurality of lower pole claws are provided on the bottom wall of the main housing;
Fig. 7 is a schematic top view of the main housing with the lower magnetic isolation plate mounted according to an embodiment;
Fig. 8 is a schematic top view showing the circumferential offset arrangement between the upper magnetic isolation plate and the lower magnetic isolation plate according to an embodiment;
Fig. 9 is a perspective schematic view of the main housing of the motor housing according to an embodiment;
Fig. 10 is a schematic axial cross-sectional view of the main housing of the motor housing according to an embodiment;
Fig. 11 is a schematic axial cross-sectional view of the motor assembly according to an embodiment;
Fig. 12 is a schematic axial cross-sectional view of the motor assembly according to an embodiment shown from another angle showing an intermediate output member;
Fig. 13 is a schematic front view of a clutch gear train of the electric drive system according to an embodiment, in which a clutch gear and a clutch disc are disengaged from each other;
Fig. 14 is a schematic axial cross-sectional view of the motor assembly and the powertrain of the electric drive system according to an embodiment, in which the clutch gear and the clutch disc are disengaged from each other;
Fig. 15 is a schematic axial cross-sectional view of an electromagnet assembly and the clutch gear train of the electric drive system according to an embodiment, in which the clutch gear and the clutch disc are disengaged from each other;
Fig. 16 is a schematic front view of the electromagnet assembly and the clutch gear train of the electric drive system according to an embodiment, in which the clutch gear and the clutch disc are meshed with each other;
Fig. 17 is a partially enlarged schematic view showing the meshing structure of the clutch gear and the clutch disc;
Fig. 18 is a perspective exploded schematic view of a receiving box for the electric drive system according to an embodiment;
Figs. 19a and 19b are respectively different schematic axial cross-sectional views of a box body of the receiving box of the electric drive system according to an embodiment;
Fig. 20 is a schematic top view of the box body of the receiving box for the electric drive system according to an embodiment, in which the electromagnet assembly and a circuit board assembly are mounted;
Fig. 21 is a schematic top view of the box body of the receiving box of the electric drive system according to an embodiment;
Fig. 22 is a perspective schematic view of the motor assembly and the box body of the receiving box assembled of the electric drive system assembled according to an embodiment;
Fig. 23 is a perspective schematic view of a cover of the motor housing of the motor assembly of the electric drive system according to an embodiment;
Fig. 24 is a schematic bottom view of a box body outer shell of the receiving box of the electric drive system according to an embodiment;
Fig. 25 is a perspective schematic view of a box body liner of the receiving box of the electric drive system according to an embodiment;
Fig. 26 is a perspective schematic view of the powertrain of the electric drive system with a damping assembly according to an embodiment;
Fig. 27 is a schematic axial cross-sectional view showing the coupling of a transmission gear train and the clutch gear train of the electric drive system according to an embodiment;
Fig. 28 is a perspective exploded schematic view of a bobbin, pins and a sheath of a coil assembly according to an embodiment;
Fig. 29 is a schematic cross-sectional view of the bobbin, the pins and the sheath of the coil assembly assembled together according to an embodiment;
Fig. 30 is a schematic top view of the bobbin of the assembled coil assembly with a terminal block according to an embodiment;
Fig. 31 is a schematic side view of the bobbin of the assembled coil assembly with the terminal block and the pins according to an embodiment;
Fig. 32 is an axial cross-sectional view of the electric drive system according to an embodiment showing placement of the pins.

### List of reference numerals

1 electric drive system
10 motor assembly
20 powertrain
21 intermediate output component
22 intermediate output shaft
30 power output assembly
31 output gear
32 input component
33 output shaft
100 main housing
101 protrusion
110 magnetic rotor
111 rotor gear shaft
120 coil assembly
130 upper pole plate
131 upper pole claw
140 lower pole plate
141 lower pole claw
150 upper magnetic isolation plate
151 upper pole claw hole
160 lower magnetic isolation plate
161 lower pole claw hole
170 fixing plate
171a, 171b, 171c, 171d, 171e support shaft
172a, 172b positioning protrusion
180 bobbin
181 first annular end plate
182 second annular end plate
183 connecting shaft
190 cover
191 first flange structure
192 first relief hole
194 relief hole
195 second cutout
200 clutch gear train
210 clutch disc
211 first axial end face
212 first meshing teeth
213 shaft
220 clutch gear
220a first clutch gear part
220b second clutch gear part
221 first mating axial end face
222 second meshing teeth
230 electromagnet assembly
231 movable core
240 first elastic return member
250 transmission gear train
251 input gear
300 receiving box
310 box body
320 box body outer shell
321 positioning spring plate
322 mounting lug
327 first receiving slot
328 first cutout
330 liner
331 positioning protrusion
332 axially extending supporting structure
333 limiting structure
333a hole
334 relief hole
335 supporting piece
336 hook
337 accommodation cavity
337a protruding circumferential wall
340 circuit board assembly
350 wire exit portion
351 first wire exit hole
352 second wire exit hole
353 partition rib
360 box cover
370 box cover outer shell
371 hole
373 bearing
380 lining cover
381 hole
383 adhering surface
400 damping mechanism
410 shaft
420 damping gear
430 damping block
431 main body portion
432 first damping arm
433 second damping arm
435 first slit
436 second slit
500 terminal block
510 first pin
511 first connecting end
512 first terminating end
513 first short segment
514 first long segment
515 first connecting segment
520 second pin
521 second connecting end
522 second terminating end
523 second short segment
524 second long segment
525 second connecting segment
530 first pin slot
533 first short segment receiving portion
534 first long segment receiving portion
535 first connecting receiving portion
536 first partition wall
540 second pin slot
543 second short segment receiving portion
544 second long segment receiving portion
545 second connecting receiving portion
546 second partition wall
550 upper end face
600 sheath
610 circumferential surrounding portion
611 skirt
612 radially outer side wall
613 partition wall
620 long segment guiding portion
621 first guide hole
622 second guide hole
650 mounting surface
α offset angle
F' pressure
f1 axial force component
f2 axial pull-in pressure

### DETAILED DESCRIPTION

Hereinafter, the electric drive system according to embodiments of the present disclosure is described in detail with reference to the accompanying drawings. In order to make the purpose, technical solutions and advantages of the present disclosure clearer, the technical solutions in the embodiments of the present disclosure will be clearly and completely described below in conjunction with the accompanying drawings in the embodiments of the present disclosure. Obviously, the described embodiments are some of the embodiments of the present disclosure, but not all of them.

Thus, the following detailed description of the embodiments of the present disclosure provided in conjunction with the accompanying drawings is not intended to limit the scope of the present disclosure to be claimed, but is merely representative of selected embodiments of the present disclosure. Based on the embodiments illustrated in the present disclosure, all other embodiments obtained by those of ordinary skills in the art without creative efforts fall within the scope of protection of the present disclosure.

Singular forms include plural forms unless the context otherwise defines. Throughout the specification, terms "include", "have" and the like are used herein to specify the presence of stated features, numbers, steps, operations, elements, parts, or combinations thereof, but do not preclude the presence or addition of one or more other features, numbers, steps, operations, elements, parts, or combinations thereof.

In addition, even though terms including ordinal numbers such as "first", "second", etc. may be used to describe various components, these components are not limited by these terms, and these terms are only used to distinguish one element from other elements. For example, a first component could be termed a second component, and, similarly, a second component could be termed a first component, without departing from the scope of the present disclosure.

In the description of the present disclosure, it should be understood that the orientations or positional relationships indicated by the terms "upper", "lower", "left", "right", "inner", "outer", etc. are based on the orientations or positional relationships shown in the drawings, or the orientations or positional relationships that is customarily placed when using the disclosed product, or the orientations or positional relationships that is customarily understood by those skilled in the art. It is only for the convenience of describing the present disclosure and simplifying the description, rather than indicating or implying that the equipment or element referred to must have a specific orientation, be constructed and operated in a specific orientation, and therefore cannot be understood as a limitation of the present disclosure.

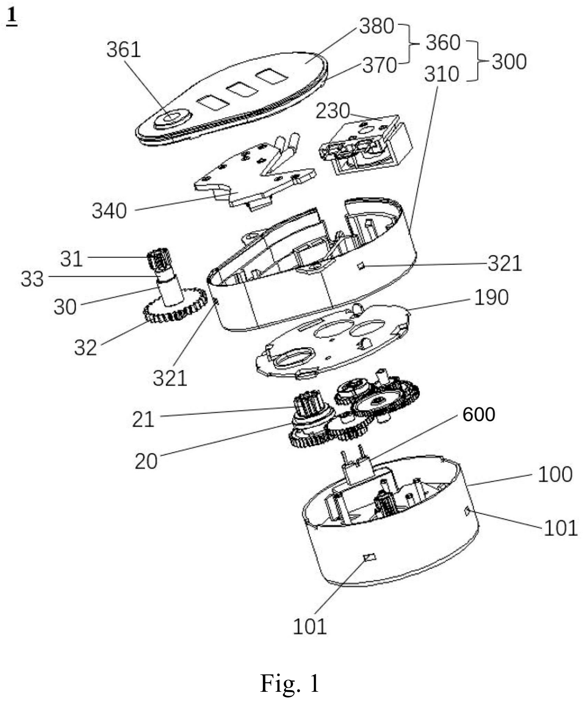

As shown in Fig. 1, according to the present disclosure, an electric drive system 1 is provided, which is used, for example, to control the opening or closing of a valve in a fluid control system. According to an embodiment, the electric drive system 1 may include a motor assembly 10, more particularly a synchronous motor assembly, more particularly a motor assembly including a claw pole synchronous motor. The electric drive system 1 may also include a powertrain 20 and a power output assembly 30, the powertrain 20 is used for transmitting power from the motor assembly 10 to the power output assembly 30, the power output assembly 30 may in turn be used to drive external components such as a valve in a fluid control system. The powertrain 20 may include an intermediate output member 21, such as an intermediate output gear. The intermediate output member is configured to couple with the power output assembly 30 to transfer power to the power output assembly 30.

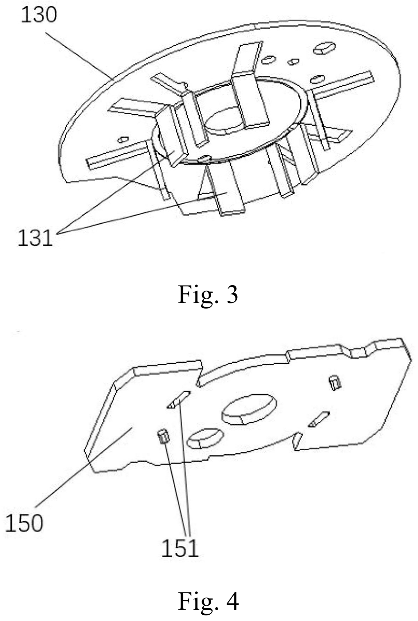

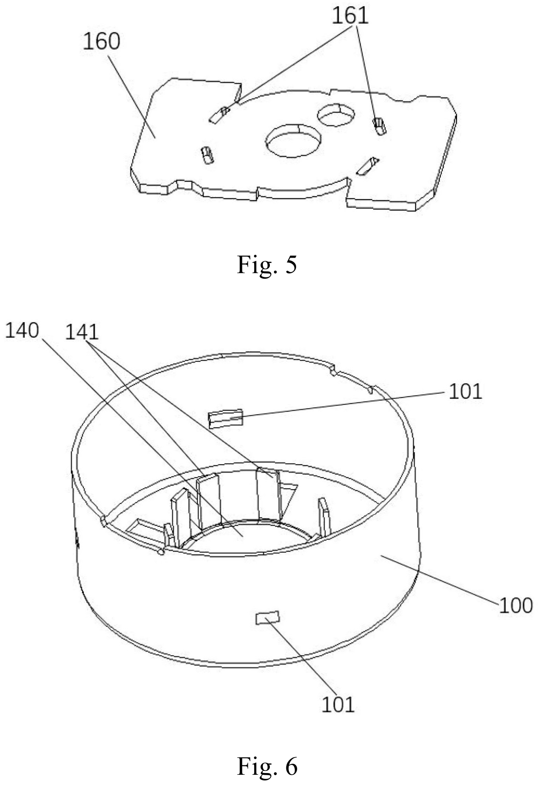

As shown in Figs. 1-12 and 23, the motor assembly 10 may include a motor housing. More specifically, the motor housing may be configured to include a main housing 100 and a cover 190, and the cover 190 may be fixed to the open end of the main housing 100. The motor assembly 10 also includes a rotatable magnetic rotor 110 located within the motor housing and a coil assembly 120 that drives the magnetic rotor 110 to rotate when energized, the coil assembly 120 for example disposed around the magnetic rotor 110. The motor assembly 10 may also include an upper pole plate 130 and a lower pole plate 140 located in the motor housing, the upper pole plate 130 is provided with a plurality of upper pole claws 131, and the lower pole plate 140 is provided with a plurality of lower pole claws 141. The number of upper pole claws 131 may be equal to the number of lower pole claws 141. More specifically, in an axial direction (i.e., in the direction along the axis of rotation of the magnetic rotor 110 of the motor assembly 10), the coil assembly 120 is located between the upper pole plate 130 and the lower pole plate 140. More specifically, the lower pole plate 140 may be a bottom plate of the main housing 100 of the motor housing.

In some embodiments, in order to control the rotational direction of the magnetic rotor 110 of the motor assembly 10 so that the magnetic rotor 110 can only start rotation in a predetermined rotational direction when the coil assembly 120 is energized and always has a tendency to rotate in the predetermined rotational direction during energization, the motor assembly 10 may include a rotor rotational orientation assembly. In a specific embodiment, the rotor rotational orientation assembly is configured to cause the coil assembly 120 to generate a driving force that make the magnetic rotor 110 to rotate in the predetermined rotational direction.

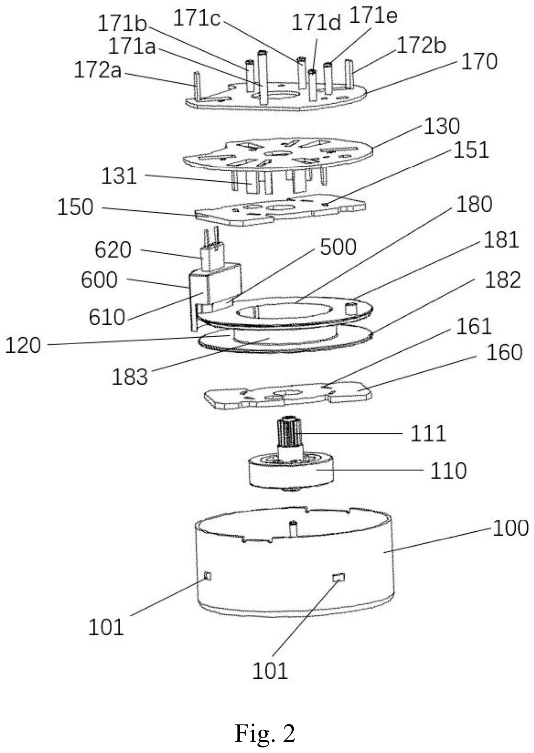

In a specific embodiment, as shown in Figs. 2-8, the rotor rotational orientation assembly includes an upper magnetic isolation plate 150 and a lower magnetic isolation plate 160 made of non-magnetic permeable material. The upper magnetic isolation plate 150 is disposed adjacent to the upper pole plate 130 and between the upper pole plate 130 and the lower pole plate 140. More specifically, the upper magnetic isolation plate 150 may be provided with corresponding upper pole claw holes 151 for the plurality of upper pole claws 131 to pass through. Accordingly, the lower magnetic isolation plate 160 is disposed between the upper pole plate 130 and the lower pole plate 140 and adjacent to the lower pole plate 140, more specifically the bottom plate of the main housing 100. More specifically, the lower magnetic isolation plate 160 may be provided with corresponding lower pole claw holes 161 for the plurality of lower pole claws 141 to pass through. In a specific embodiment, the lower pole claws 141 are directly formed on the bottom plate of the main housing 100 of the motor housing, and the lower magnetic isolation plate 160 is disposed to adhere to the bottom plate of the main housing 100 and is fixedly connected to the bottom plate of the main housing 100, for example by riveting. More specifically, the upper magnetic isolation plate 150 adheres to the upper pole plate 130 and is fixedly connected thereto, for example by riveting.

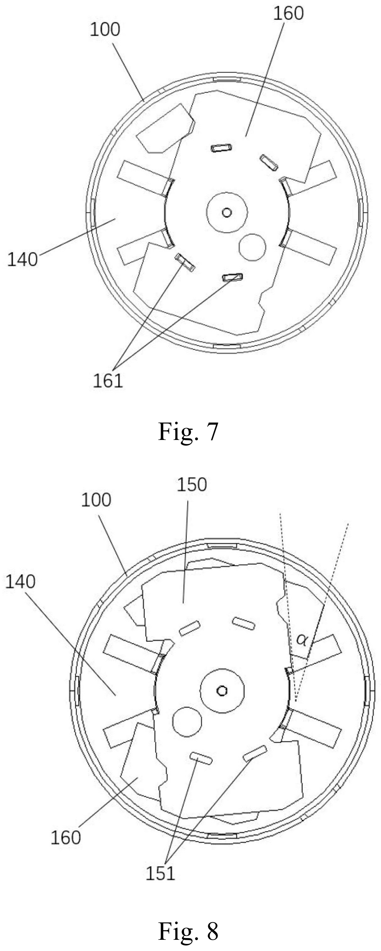

Therefore, a magnetic field is generated when the coil assembly 120 of the motor assembly 10 is energized, but due to the presence of the upper magnetic isolation plate 150 and the lower magnetic isolation plate 160, a part of the magnetic circuit of the coil assembly 120 is shielded, so that the magnetic rotor 110 can only start rotation in a predetermined rotational direction, which is used, for example, to open a valve. As shown in Fig. 8, in some embodiments, the upper magnetic isolation plate 150 and the lower magnetic isolation plate 160 are arranged to be offset relative to each other in the circumferential direction at an offset angle α, and the offset angle α satisfies α = 360°/n/2, where n is the number of pole pairs of the motor assembly. The offset angle α allows the upper magnetic isolation plate 150 and the lower magnetic isolation plate 160 to achieve optimal rotor rotational positioning performance. In a specific embodiment, as shown in Figs. 2-8, the upper magnetic isolation plate 150 and the lower magnetic isolation plate 160 are configured to be consistent in shape with each other, and more specifically, the upper magnetic isolation plate 150 and the lower magnetic isolation plate 160 are configured to be completely the same with each other, which can reduce investment in molds and ensure stable operating characteristics.

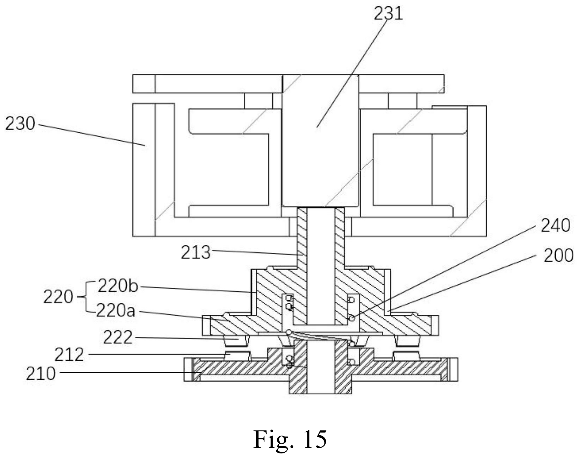

In some embodiments, as shown in Figs. 1, 13-16, 26, the powertrain 20 may include a clutch gear train 200 and a transmission gear train 250. The clutch gear train 200 is configured to kinematically couple the magnetic rotor 110 with the transmission gear train 250. In one embodiment, the clutch gear train 200 may include a clutch disc 210 and a clutch gear 220. The clutch disc 210 may be arranged in association with the magnetic rotor 110 to rotate when the magnetic rotor 110 rotates to transmit the power from the magnetic rotor 110, that is, transmit the motor driving force. More specifically, the magnetic rotor 110 may include a rotor gear shaft 111, which is, for example, integrally formed with the magnetic rotor 111, and the clutch disc 210 is configured to directly mesh with the rotor gear shaft 111. The clutch gear 220 is configured to mesh with the input gear 251 of the transmission gear train 250 and is configured to be movable between an extended position in which the clutch gear 220 is engaged with the clutch disc 210 and a retracted position in which the clutch gear 220 is disengaged from the clutch disc 210. Thus, the kinematic coupling and disengagement of the powertrain 20 and the magnetic rotor 110 can be controlled by controlling the clutch gear train 200, more specifically the engagement and disengagement of the clutch gear 220 and the clutch disc 210. In a specific embodiment, as shown, the clutch gear 220 may include a first clutch gear part 220a configured to mesh with the clutch disc 210 and a second clutch gear part 220b configured to mesh with the input gear 251 of the transmission gear train 250, and the first clutch gear part 220a and the second clutch gear part 220b may be integrally formed.

As shown in Figs. 1, 15-16, 18, and 20, in some embodiments, the powertrain 20 may further include an electromagnet assembly 230 for driving the clutch gear 220. The electromagnet assembly 230 may include a movable core 231 configured to move the clutch gear 220, e.g., via the shaft 213 of the clutch gear 220, from the retracted position to the extended position to engage with the clutch disc 210 when the electromagnet assembly is energized. In a specific embodiment, the first axial end face 211 of the clutch disc 210 is opposite to the first mating axial end face 221 of the clutch gear 220. One or more first meshing teeth 212 are provided on the first axial end face 211. One or more second meshing teeth 222 that can mesh with the first meshing teeth 212 are provided the first mating axial end face 221. The first meshing teeth 212 and the second meshing teeth 222 are both triangular teeth, for example. Therefore, through the meshing of the first meshing teeth 212 and the second meshing teeth 222, the kinematic engagement between the clutch disc 210 and the clutch gear 220 can be achieved. More specifically, when the clutch disc 210 is driven to rotate by the magnetic rotor 110, the clutch gear 220 can move from the retracted position to the extended position driven by the movable core 231 so that its second meshing teeth 222 mesh with the first meshing teeth 212 of the clutch disc 210, so that the first meshing teeth 212 transmit the rotational force to the second meshing teeth 222, thereby driving the clutch gear 220 to rotate at the same speed, forming the transmission of the rotational force. In a specific embodiment, the clutch gear train 200 may further include a first elastic return member 240, such as a compression spring, and the first elastic return member 240 is configured to actuate the clutch gear when the electromagnet assembly 230 is de-energized, so that the clutch gear 220 is disengaged from the clutch disc 210, and more specifically, the second meshing teeth 222 on the first mating axial end face 221 of the clutch gear 220 no longer meshes with the first meshing teeth 212 on the first axial end face 211 of the clutch disc 210, thereby disengaging the kinematic coupling between the magnetic rotor 110 and the transmission gear train 250. In a specific embodiment, the electromagnet assembly 230 and the motor assembly 10 are energized simultaneously; more specifically, the electromagnet assembly 230 and the motor assembly 10 are de-energized simultaneously.

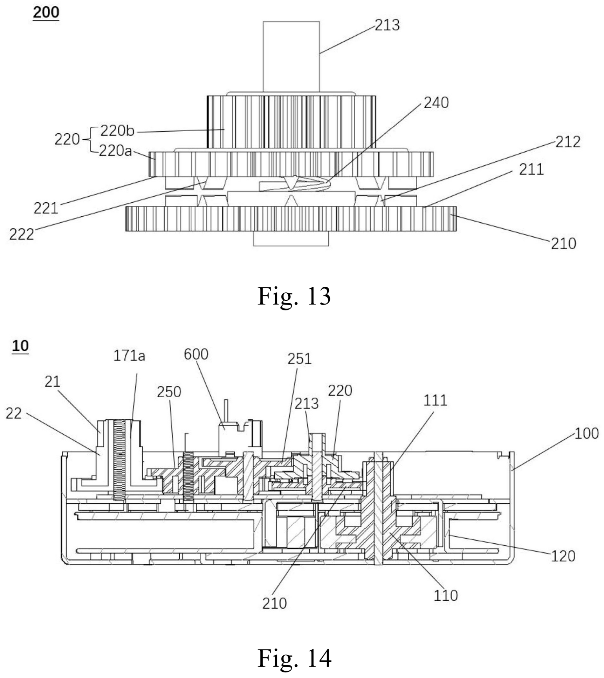

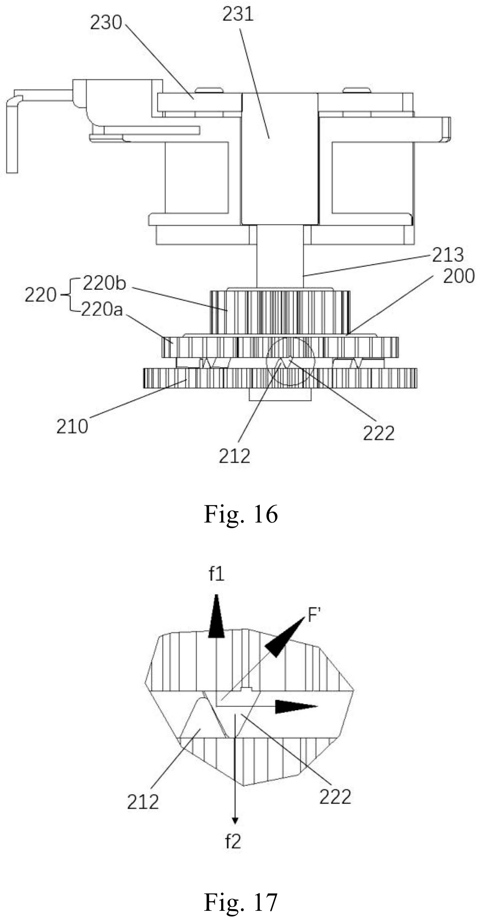

As mentioned above, in a specific embodiment, as shown in Fig. 14, the clutch gear train 200 is arranged as the next stage of the magnetic rotor 110, that is, the clutch disc 210 directly meshes with the rotor gear shaft 111. This is an advantageous arrangement. Specifically, as shown in Figs. 16 and 17, when the electromagnet assembly 230 and the motor assembly 10 are energized, the movable core 231 presses down the clutch gear 220 to mesh with the clutch disc 210, and at the same time, the magnetic rotor 110 rotates to drive the clutch disc 210, the first meshing tooth 212 of the clutch disc 210 exerts pressure F' on the second meshing tooth 222 of the clutch gear 220 at the end face, the axial force component of the pressure F' is f1, and the axial pull-in pressure f2 of the movable core 231 on the second meshing tooth 222 needs to be greater than the axial force component f1 to ensure that the clutch gear 220 and the clutch disc 210 remain meshed, thereby kinematically coupling the entire power transmission chain. If the axial pull-in pressure f2 is less than the axial force component f1, the clutch gear 220 will be actuated upward, and the normal meshing of the second meshing teeth 222 with the first meshing teeth 212 cannot be ensured, which may cause the power transmission chain to be disengaged. The pull-in pressure f2 of the electromagnet assembly 230 is affected by its volume and cost. The larger f2, the higher the cost of the electromagnet and the larger the volume of the electromagnet. Therefore, it is hoped to reduce f2 as much as possible to reduce costs and volume, thereby ensuring market competitiveness. Therefore, f1 should not be too large, and the faster the rotation speed of the clutch gear train 200 is, the smaller f1 is. Considering that in general the powertrain is a reduction gear train, the gears closer to the magnetic rotor 110 rotate faster, so it is preferable to set the clutch disc 210 to directly mesh with the rotor gear shaft 111.

Thus, in the case where the electric drive system 1 is used for a valve in a fluid control system, when the motor assembly 10 and the electromagnet assembly 230 are energized, for one aspect, the coil assembly 120 is energized to generate a magnetic circuit, and due to the presence of the upper magnetic isolation plate 150 and the lower magnetic isolation plate 160, part of the magnetic circuit of the coil assembly 120 is shielded, so that the magnetic rotor 110 can only start to rotate in the predetermined rotational direction, and the magnetic rotor 110 drives the clutch disc 210 coupled with it, such as directly meshed with it, to rotate in a predetermined rotational direction; for another aspect, the movable core 231 of the electromagnet assembly 230 drives the clutch gear 220 from the retracted position to the extended position to engage with the clutch disc 210 to transmit the rotational force to the clutch gear 220, and the clutch gear 220 thus drives the transmission gear train 250 engaged therewith via the input gear 251 to rotate in a predetermined rotational direction; the transmission gear train 250 then drives the power output assembly 30 to rotate in a predetermined rotational direction via the intermediate output member 21, such as the intermediate output gear, and the power output assembly 30 drives the valve to open via its output gear 31, for example, and more specifically drives the valve to open via a dial., that is, the kinematic coupling of the entire power transmission chain is achieved.

In some application scenarios, the valve needs to be continuously kept in the open state. At this time, the electric drive system 1 needs to be in an "energized and locked-rotor state". That is, at this time, the power output assembly 30, such as the output gear 31, needs to continuously exert an opening driving force on the valve, more particularly on the dial, so that the valve can remain in the open state against its own gravity or the elastic restoring force of its elastic return member. At this time, the valve will exert a reverse rotational external force, that is, a force opposite to the predetermined rotational direction, on the power output assembly 30, more specifically the output gear 31, due to its own gravity or its elastic return member, so that the output gear 31 and therefore the power output assembly 30 stops rotating, correspondingly the powertrain 20 and the magnetic rotor 110 also stop rotating, and the valve remains open. During the continuous energization of the motor assembly 10 and the electromagnet assembly 230, if the valve or the dial is accidentally subjected to a large reverse rotational force, causing the power output assembly 30 to rotate in the reverse direction, the reverse rotational force is then transmitted through the powertrain 20 to the magnetic rotor 110, the magnetic rotor 110 can rotate in the reverse direction, that is, rotate in the opposite direction to the predetermined rotational direction; when the large reverse external force is removed, due to the presence of the upper magnetic isolation plate 150 and the lower magnetic isolation plate 160, the magnetic rotor 110 will return to rotating in the predetermined rotational direction, so that the powertrain 20 and the power output assembly 30 will again rotate in the predetermined rotational direction in the normal working state until they are again in the "energized and locked-rotor state". Thus, the provision of the upper magnetic isolation plate 150 and the lower magnetic isolation plate 160 allows the directional rotation of the magnetic rotor to be achieved without having to provide an anti-reverse pawl in the power transmission chain, which are usually required in the existing art, thereby completely avoiding the disadvantages associated with the use of the anti-reverse pawl. More specifically, after a synchronous motor using an anti-reverse pawl structure is locked up, the rotor will instantaneously rotate in the reverse direction, and then be blocked by the anti-reverse pawl and rebound to generate a collision sound. The forward rotation of the rotor is still blocked, so that the rotor rebounds repeatedly and generates dense impact noise, and the gears are easily damaged. The presence of the upper magnetic isolation plate 150 and the lower magnetic isolation plate 160 allows that after the motor is locked up, the force in a specific direction continuously subjected to by the magnetic rotor 110 from the magnetic field of the coil assembly 120 is balanced with the locking resistance, and the motor assembly 10 is in the relatively stationary state and does not produce noise.

When the motor assembly 10 and the electromagnet assembly 230 are de-energized, the magnetic rotor 110 stops rotating, the motor driving force disappears, and the valve drives the power output assembly 30, such as through the dial, to rotate in the opposite direction under the elastic return member or its own gravity; the electromagnet assembly 230 is de-energized, the movable core 231 restores, the clutch gear 220 is actuated by the first elastic return member 240 to disengage from the clutch disc 210, and the entire power transmission chain is disengaged, so that the restoring force of the valve cannot be transmitted to the magnetic rotor 110, so the resistance for the valve to close after the de-energization is only the possible friction force of some transmission components in the powertrain 20, and there is no electromagnetic torque of the magnetic rotor 110. As a result, the restoring resistance for the valve is small, the restoring speed of the valve is fast, and the valve can restore immediately after the de-energization, effectively shortening the valve closing time and improving the user experience. Because of the low restoring resistance, the impact force when the valve restores to close is high, which prevents poor sealing caused by improper closing. In addition, there is no hysteresis loop of the hysteresis motors, the materials used are cheap, reducing costs and improving product competitiveness. In addition, the claw pole synchronous motor has simple control and low locked-rotor current, which can achieve long-time locked-rotor in an energy saving manner. In addition, the claw pole synchronous motor has a control approach that remains consistent with the hysteresis motor, so that there is no need to change the control mode, the procedures and the wiring mode at the client's side, giving strong applicability.

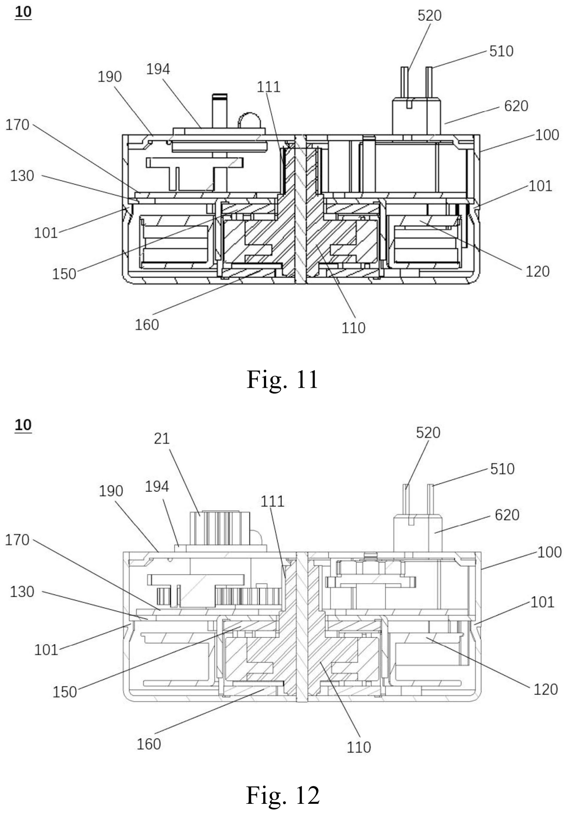

As shown in Figs. 12 and 14, in some embodiments, at least a portion of the clutch gear train 200 and the transmission gear train 250 are disposed within the motor housing. More specifically, the transmission gear train 250 may include, as described above, an intermediate output member 21, such as an intermediate output gear, that extends out of the motor housing to engage the input member 32 of the downstream power output assembly 30. In some more specific embodiments, the clutch gear train 200 and the transmission gear train 250 and at least a portion of the power output assembly 30 may be located within the motor housing.

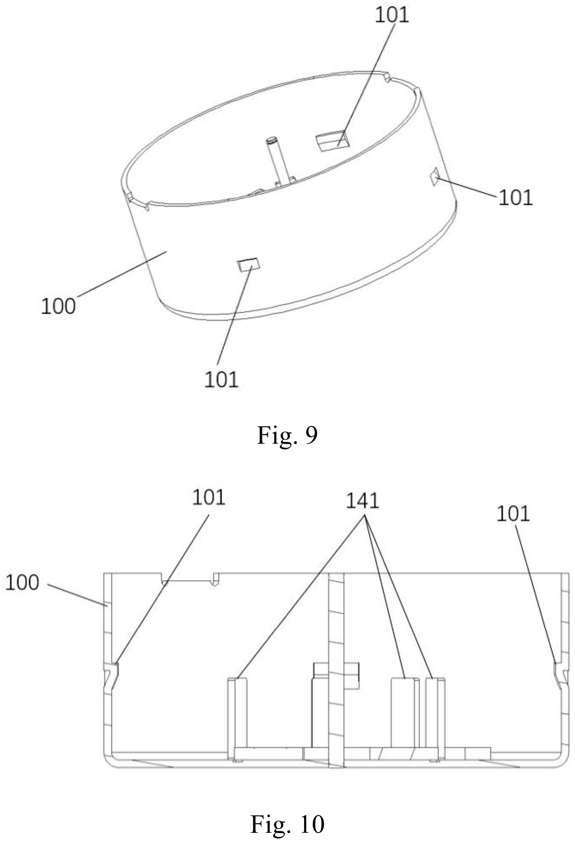

In some embodiments, as shown in figs. 11-12, in order to support the transmission gear train 250 and the clutch gear train 200 within the motor housing, and more specifically the main housing 100, the motor assembly 10 may further include a fixing plate 170 disposed in the motor housing, the fixing plate 170 is configured to support the transmission gear train 250 and the clutch gear train 200 together with the cover 190 of the motor housing, and more specifically, the transmission components of the transmission gear train 250 and the clutch gear train 200 have a clearance with the fixing plate 170 and with the cover 190 to reduce transmission resistance and therefore restoring resistance of, for example, the above-mentioned valve. The fixing plate 170 is provided with, for example, a plurality of support shafts 171a, 171b, 171c, 171d, 171e (shown in Fig. 2), which extend toward the cover 190 in the assembled state and can support the gear components of the transmission gear train 250 and the clutch gear train 200. In addition, in a more specific embodiment, as shown in Fig. 2, the fixing plate 170 is also provided with positioning protrusions 172a and 172b that extend toward the cover 190 and abut the cover 190 in the assembled state, which is beneficial to ensuring the axial positioning of the fixing plate 170 relative to the cover 190, which ensures the stability of the above-mentioned clearance. In a specific embodiment, the main housing 100 of the motor housing may include a positioning member configured to position the fixing plate 170, the positioning member being configured to position the fixing plate 170 within the main housing 100 of the motor housing, thereby ensuring the distance between the fixing plate 170 and the cover 190, and thus ensuring the above-mentioned clearance. More specifically, as shown in figs. 9-12, the positioning member may include a plurality of protrusions 101 provided on the peripheral wall of the main housing 100 of the motor housing, and the upper ends of these protrusions 101 are located on the same plane that is parallel to the top face of the main housing 100, that is, the face for fixing together with the cover 190, this plane constitutes a reference face for positioning the fixing plate 170. These protrusions 101 may protrude from the peripheral wall of the main housing 100 toward the inside of the main housing 100, and for example, the plurality of protrusions 101 may be evenly distributed in the circumferential direction. The protrusions 101 may be formed by stamping.

As shown in Figs. 11-12, in some embodiments, the upper pole plate 130 is placed on these protrusions 101 and abuts respective upper ends of the protrusions 101, and the fixing plate 170 is disposed on a side of the upper pole plate 130 opposite to the upper magnetic isolation plate 150. That is, along the axial direction, the upper pole plate 130 is located between the fixing plate 170 and the upper magnetic isolation plate 150. More specifically, the fixing plate 170 and the upper magnetic isolation plate 150 respectively adhere to the two axial surfaces of the upper pole plate 130. The fixing plate 170, the upper pole plate 130 and the upper magnetic isolation plate 150 can be fixedly connected by riveting or other methods. Therefore, since the upper pole plate 130 and the fixing plate 170 are relatively fixed, their positioning heights are determined based on the position of the protrusions 101 on the main housing 100. The transmission gear train 250 and the clutch gear train 200 are mounted between the fixing plate 170 and the cover 190. Since the axial position of the fixing plate 170 is controllable, the axial clearance between the transmission gear train 250 and the clutch gear train 200 with the fixing plate 170, as well as the axial clearance between the transmission gear train 250 and the clutch gear train 200 with the cover 190, are allowed to be controlled more precisely, making the transmission more stable; in the meantime, since the clearance between the transmission gear train 250, the clutch gear train 200 and the cover 190 is stable, the problem that the friction force is increased due to the small clearance caused by vibration or the like at the time of the electric drive system, and thus the valve restoring resistance is too large is prevented.

As shown in Fig. 12, in one embodiment, a clearance is provided between the coil assembly 120 and the upper magnetic isolation plate 150. This can prevent the coil assembly 120 from increasing in height after being wound and abutting against the upper magnetic isolation plate 150, causing the upper magnetic isolation plate 150, the upper pole plate 130 and the fixing plate 170 to lift up, causing poor clearance fit. Therefore, this further facilitates clearance stabilization between the transmission gear train 250 and the clutch gear train 200 and the cover 190.

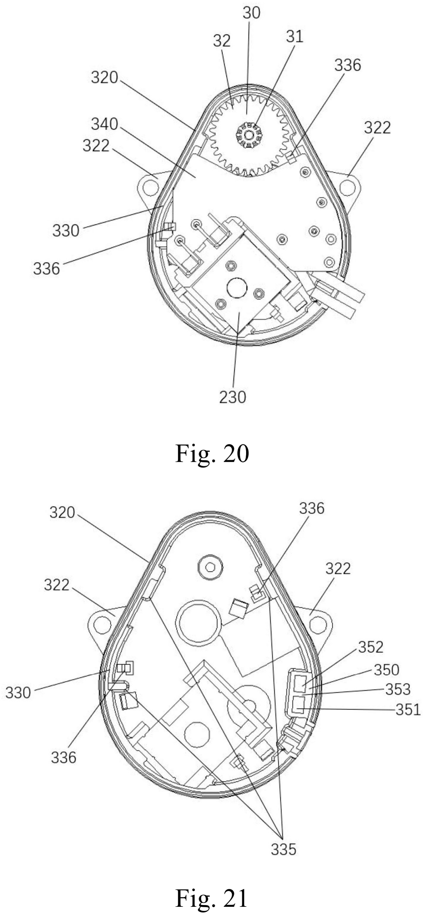

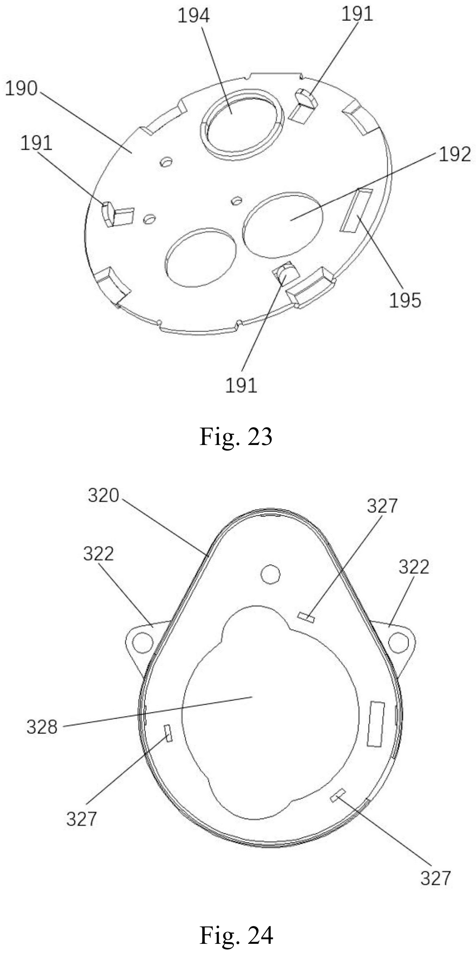

In one embodiment, as shown in Figs. 1, 18-25, 27 and 32, the electric drive system 1 further includes a receiving box 300, which may include a box body 310 and a box cover 360 configured to cover the open end of the box body 310, the box body 310 includes a box body outer shell 320 made of metal material, and the box cover 360 includes a box cover outer shell 370 made of metal material, and the metal material may be a high-strength galvanized steel plate or aluminum alloy. As shown in Figs. 1 and 20, in a specific embodiment, the power output assembly 30 is disposed in the receiving box 300, and the power output assembly 30 can drive other components to move via its power output component, such as the output gear 31, for example, when the electric drive system 1 is used in a fluid control system, the power output assembly 30 drives valves to move. At this time, the box body outer shell 320 and the box cover outer shell 370 made of metal material with high strength can ensure better support for the power output assembly 30. In addition, the receiving box 300 may need to be mounted directly to the external customer end by screws or the like, such as through mounting lugs 322 provided on the box body outer shell 320 as shown in Fig. 24. The stronger box body outer shell 320 and box cover outer shell 370 can ensure mounting strength and reliability and prevent deformation due to mounting. More specifically, at this time, a hole 371 through which the output shaft 33 for supporting the output gear 31 passes may be provided in the box cover outer shell 370.

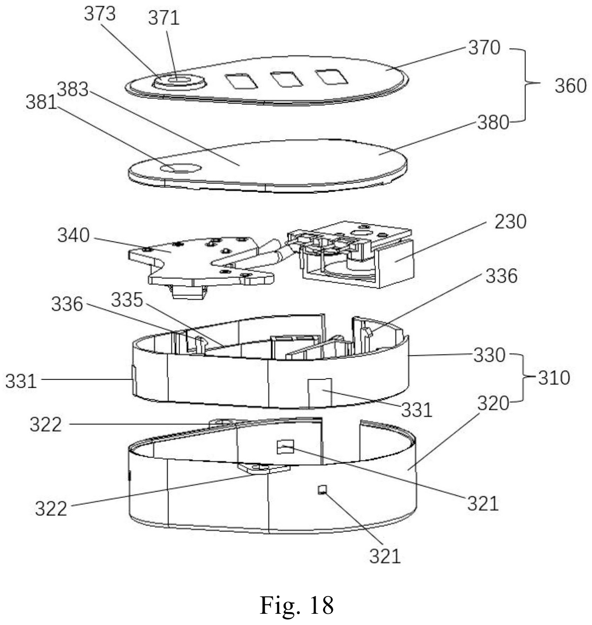

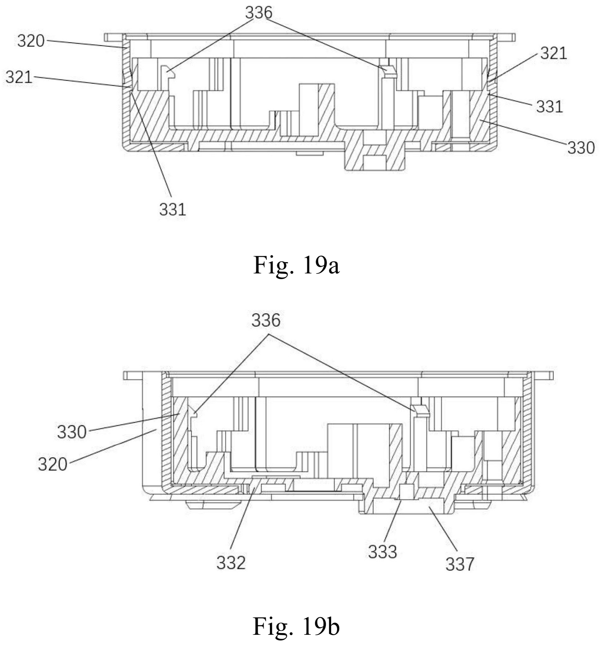

As shown in figs. 18-22, 27, and 32, in some embodiments, the box body 310 of the receiving box 300 may further include a liner 330 made of insulating material, the liner 330 being disposed inside the box body outer shell 320, and the box body outer shell 320 wraps around the liner 330. More specifically, the box cover 360 may also include a lining cover 380 made of insulating material. The insulating material may be, for example, a plastic material. In a specific embodiment, as shown in Figs. 18 and 19a, a plurality of positioning spring plates 321 extending inwardly from the peripheral wall are provided on the peripheral wall of the box body outer shell 320. The positioning spring plates 321 are formed, for example, by punching holes on the peripheral wall of the box body outer shell 320; correspondingly, a plurality of positioning protrusions 331 protruding inwardly from the peripheral wall may be provided on the peripheral wall of the liner 330. When the liner 330 is mounted into the box body outer shell 320, the positioning spring plate 321 is pressed flat, for example, flush with the peripheral wall of the box body outer shell 320, and the liner 330 can slide down to the bottom along the peripheral wall of the box body outer shell 320. As the liner 330 is mounted in place, the positioning spring plate 321 on the box body outer shell 320 rebounds and causes its lower end to abut against the upper end of the positioning protrusion 331 of the liner 330, thereby achieving the positioning of the liner 330 in the box body outer shell 320, preventing the liner 330 from accidentally coming out from the open end of the box body outer shell 320. As shown in Fig. 18, in a specific embodiment, the lining cover 380 is provided with a hole 381 corresponding to the hole 371 in the box cover outer shell 370, and the hole 381 is also provided for the output shaft 33 to pass through. More specifically, a bearing 373 is provided in the hole 371 of the box cover outer shell 370, and the bearing 373 is configured to support the rotation of the output shaft 33.

As shown in Fig. 20, in some embodiments, the electric drive system 1 includes a circuit board assembly 340 housed in the receiving box 300, the circuit board assembly 340 being configured to transmit power to the motor assembly 10 and the electromagnet assembly 230, more specifically, transmit power simultaneously to the motor assembly 10 and the electromagnet assembly 230. More specifically, the electromagnet assembly 230 is also housed in the receiving box 300. Thus, the electromagnet assembly 230 and the circuit board assembly 340 can be surrounded by the liner 330 and the lining cover 380, and insulating material is used for the liner 330 and the lining cover 380 to ensure circuit safety. More specifically, as shown in Figs. 18, 19a, 19b and 20-21, a supporting piece 335 for supporting the circuit board assembly 340 on a first side of the circuit board assembly 340 and a hook 336 for catching the circuit board assembly 340 on a second side of the circuit board assembly 340 opposite the first side. Thereby, the circuit board assembly 340 can be firmly held in the liner 330 via the supporting piece 335 and the hook 336.

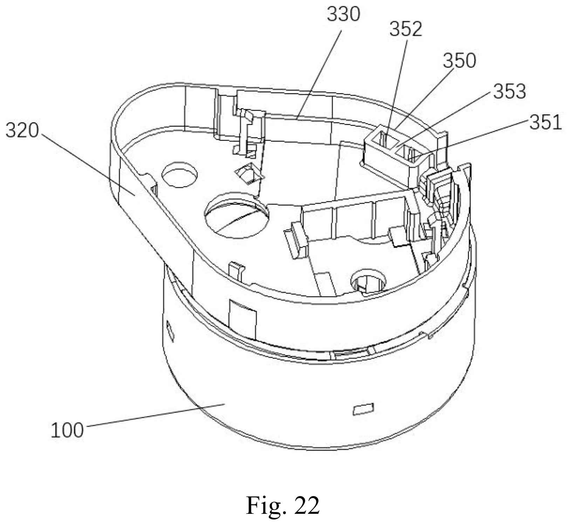

As shown in Figs. 22-24, in some embodiments, the receiving box 300 is coupled to the cover 190 of the motor housing via the box body 310. To this end, first flange structures 191 protruding outward may be provided on the outer surface of the cover 190, and the bottom of the box body 310, more specifically the bottom of the box body outer shell 320, is provided with first receiving slots 327, each first receiving slot 327 is configured to receive a corresponding first flange structure 191. More specifically, the first flange structure 191 is configured to pass through the first receiving slot in the bottom of the box body outer shell 320 and bend after passing through to be riveted to the box body outer shell 320. Or alternatively or additionally, a second flange structure protruding outward may also be provided on the bottom of the box body 310, more specifically the bottom of the box body outer shell 320, and second receiving slots may be provided on the cover 190, each second receiving slot is configured to receive a corresponding second flange structure. More specifically, the second flange structure is configured to pass through the second receiving slot in the cover 190 and bend after passing through to be riveted to the cover 190. More specifically, when assembling the electric drive system 1, the cover 190 of the motor housing may first be fixed to its main housing 100, for example by riveting, and then the box body outer shell 320 and the cover 190 of the motor housing are connected via the cooperation of the flange structures 191 and the receiving slots 327 and fixed via riveting, and then the liner 330 is mounted into the box body outer shell 320.

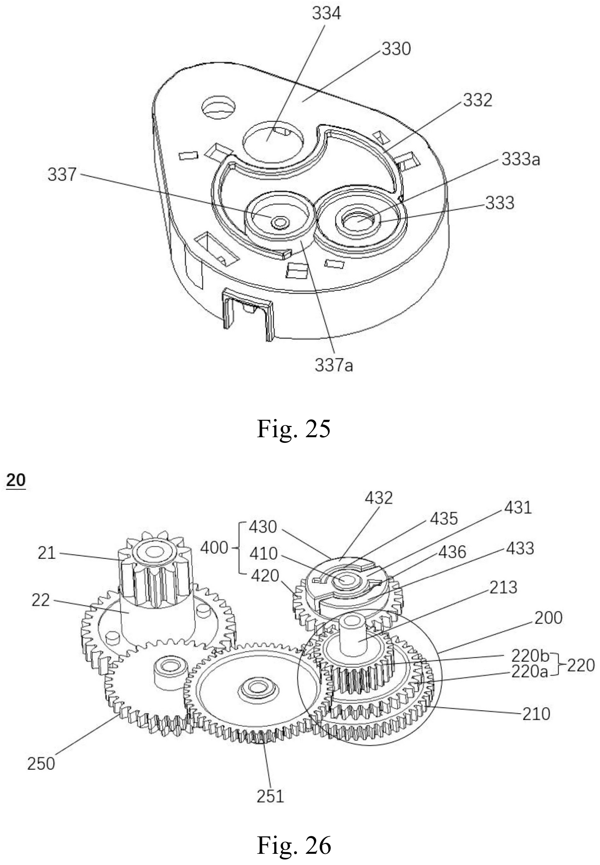

As shown in figs. 24 and 25, in some embodiments, a first cutout 328 may be provided at the bottom of the box body outer shell 320, and the bottom of the liner 330 may be provided with an axially extending supporting structure 332 extending through the first cutout 328 in the assembled state, the axially extending supporting structure 332 configured to abut the outer surface of the cover 190 of the motor housing in the assembled state. The axially extending supporting structure 332 is more specifically a rib having a certain width and height. The axially extending supporting structure 332 allows for a stable positioning of the liner 330 and thus helps to ensure axial clearance of the transmission components of the powertrain 20, reducing friction.

As shown in figs. 23, 25 and 27, in some embodiments, the cover 190 of the motor housing may be provided with a first relief hole 192 corresponding to the clutch gear 220, and the bottom of the liner 330 may be provided with a limiting structure 333 for the clutch gear 220, the limiting structure 333 may participate in defining the retracted position of the clutch gear 220. This allows a more compact axial structure to be achieved. In a specific embodiment, the limiting structure 333 can protrude axially outward from the bottom of the liner 330, for example, it can correspond to the first cutout 328 at the bottom of the box body outer shell 320, so that the first cutout 328 also serves as a relief portion of the clutch gear 220. In a specific embodiment, a hole 333a for the shaft 213 of the clutch gear to pass through may be provided in the limiting structure 333, so that the shaft 213 can reach the movable core 231 of the electromagnet assembly 230 located in the liner 330 through the hole 333a. In a more specific embodiment, as shown in Figs. 18 and 23, relief holes 194, 334 are also provided in the cover 190 of the motor housing and in the bottom of the liner 330, respectively, for the intermediate output member 21 to pass through, for example, for the intermediate output shaft 22 carrying the intermediate output gear to pass through.

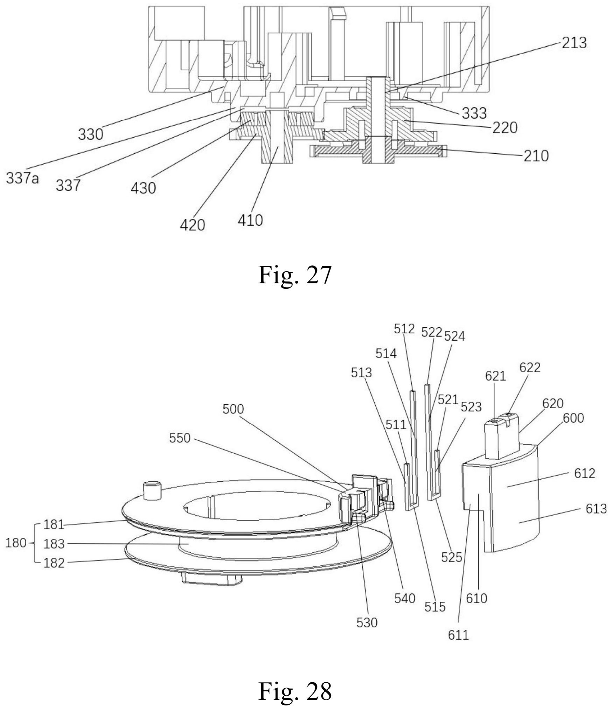

As shown in figs. 26-27, in some embodiments, the electric drive system 1 may further include a damping mechanism 400 configured to contribute to the stability of reverse restore during de-energization (stability of restoring for the closing of valve) and stable operation and maintenance of the transmission gear train 250. The damping mechanism 400 may include a damping gear 420 arranged to mesh with the clutch gear 220 and a damping block 430 disposed on the damping gear 420. More specifically, the damping block 430 may be axially stacked on the damping gear 420, and the damping block 430 includes a main body portion 431 configured to be coupled to the damping gear 420 via a shaft 410 and two circumferentially extending damping arms 432, 433. Each damping arm 432, 433 is connected to the main body portion 431 at one circumferential end. More specifically, the two damping arms 432, 433 are arranged centrally symmetrically relative to the center of the shaft 410. As shown in the figure, in a specific embodiment, the damping block 430 is a disc with a certain thickness, the disc includes a first slit 435 and a second slit 436 offset from its center and centrally symmetrical, and the main body portion 431 is located between the first slit 435 and the second slit 436 and includes the center of the disc. One end of each of the first slit 435 and the second slit 436 opens on the periphery of the disc, and the opposite end is connected to the main body portion 431 at a location relatively close to the periphery, to form the first damping arm 432 and the second damping arm 433 respectively. In this case, in order to ensure the axial compactness of the electric drive system 1, an accommodation cavity 337 for receiving the damping block 430 may also be provided at the bottom of the liner 330, as shown in figs. 25 and 27. In a specific embodiment, the accommodation cavity 337 is surrounded by a protruding circumferential wall 337a extending axially outward from the bottom of the liner 330, and the accommodation cavity 337 may correspond, for example, to the first cutout 328 passing through the bottom of the box body outer shell 320, so that the first cutout 328 also serves as a relief portion for the damping block 430.

As mentioned above, in some embodiments, the circuit board assembly 340 for power supply of the electric drive system 1 is disposed outside the motor housing, which facilitates control circuit safety. For example, in the embodiment shown in fig. 20, it is located in the receiving box. In some embodiments, as shown in figs. 28-32, the coil assembly 120 of the motor assembly 10 may include a bobbin 180 and a winding disposed on the bobbin 180. A terminal block 500 may be provided on the bobbin 180. The terminal block 500 is configured to receive pins 510, 520 that electrically communicate the winding with the circuit board assembly 340, specifically two pins, which may be referred to as the first pin 510 and the second pin 520 respectively. The first pin 510 and the second pin 520 may be circular cylindrical pins or rectangular pins. To this end, the terminal block 500 may be provided with two pin slots 530 and 540, each pin slot 530 and 540 is used to receive a pin inserted therein, for example, the first pin slot 530 is used to receive the first pin 510 inserted therein, and the second pin slot 540 is used to receive the second pin 540 inserted therein. For example, the first pin slot 530 and the second pin slot 540 may be open radially outward. The first pin 510 includes a first connecting end 511 and a first terminating end 512, and the second pin 520 includes a second connecting end 521 and a second terminating end 522, and the first connecting end 511 and the second connecting end 521 are used for electrically connected to the winding, the first terminating end 512 and the second terminating end 522 are used to terminate to the circuit board assembly 340. To ensure electrical safety, the electric drive system of the present disclosure may include a sheath 600 that may be configured to cooperate with the terminal block 500 to surround at least a portion of the first pin 510 and at least a portion of the second pin 520. More specifically, the portion of the first pin 510 other than the first terminating end 512 and the portion of the second pin 520 other than the second terminating end 522 are surrounded.

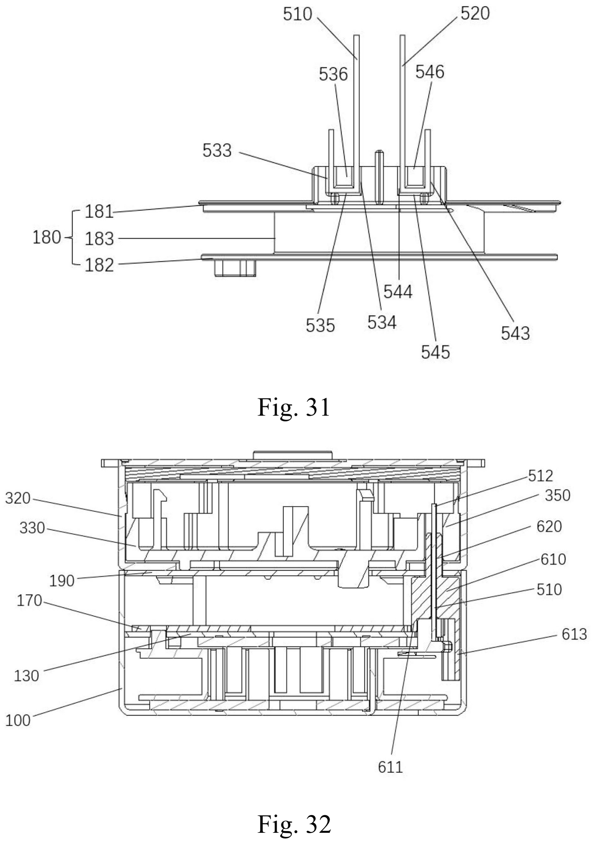

In some embodiments, as shown in figs. 28 and 31, the first pin 510 is configured to have two bending portions that divide the first pin 510 into a first short segment 513, a first long segment 514 and a first connecting segment 515 connecting the first short segment 513 and the first long segment 514, the first short segment 513 includes the first connecting end 511, and the first long segment 514 includes the first terminating end 512. Similarly, the second pin 520 is configured to have two bending portions that divide the second pin 520 into a second short segment 523, a second long segment 524, and a second connecting segment 525 connecting the second short segment 523 and the second long segment 524, the second short segment 523 includes the second connecting end 521, and the second long segment 524 includes the second terminating end 522. Correspondingly, the first pin slot 530 of the terminal block 500 may be configured to have a first short segment receiving portion 533, a first long segment receiving portion 534, and a first connecting receiving portion 535 connecting the first short segment receiving portion 533 and the first long segment receiving portion 534, a first partition wall 536 is provided between the first short segment receiving portion 533 and the first long segment receiving portion 534, wherein the first short segment receiving portion 533 is configured to accommodate the first short segment 513, the first long segment receiving portion 534 is configured to accommodate the first long segment 514, and the first connecting receiving portion 535 is configured to accommodate the first connecting segment 515. Similarly, the second pin slot 540 of the terminal block 500 may be configured to have a second short segment receiving portion 543, a second long segment receiving portion 544, and a second connecting receiving portion 545 connecting the second short segment receiving portion 543 and the second long segment receiving portion 544, a second partition wall 546 is provided between the second short segment receiving portion 543 and the second long segment receiving portion 544, wherein the second short segment receiving portion 543 is configured to receive the second short segment 523, the second long segment receiving portion 544 is configured to receive the second long segment 524, and the second connecting receiving portion 545 is configured to receive the second connecting segment 525. More specifically, a portion of the first long segment 514 with the first terminating end 512 is exposed outside the first long segment receiving portion 534, and a portion of the first short segment 513 with the first connecting end 511 can also be exposed outside the first short segment receiving portion 533 to facilitate termination with the winding; similarly, a portion of the second long segment 524 with the second terminating end 522 is exposed outside the second long segment receiving portion 544, and a portion of the second short segment 523 with the second connecting end 521 can also be exposed outside the second long segment receiving portion 544 to facilitate termination with the winding. In a specific embodiment, as shown in the figure, the first pin 510 is arranged in the assembled state with its first short segment 513 and first long segment 514 extending substantially parallel to each other, more specifically axially extending; similarly, the second pin 520 is arranged in the assembled state with its second short segment 523 and second long segment 514 extending substantially parallel to each other, more specifically axially extending. In one embodiment, the first pin 510 and the second pin 520 are arranged such that the first long segment 514 and the second long segment 524 are arranged adjacent to each other, which allows the volume and use of material of the sheath 600 to be reduced, thereby facilitating overall compactness of the system.

In a more specific embodiment, as shown in figs. 28-29 and 32, the sheath 600 may also be provided with a circumferential surrounding portion 610, which may be configured to surround the a portion of the long segments 514, 524 and the entire short segments 513, 523of the two pins 510, 520, and the circumferential surrounding portion 610 is provided with a mounting surface 650 for mounting against the upper end face 550 of the terminal block 500, whereby the sheath 600 can be mounted on the terminal block 500. More specifically, as shown in the figures, the sheath 600 may also be provided with a long segment guiding portion 620 configured to guide the long segments 514, 524 of the pins 510, 520 to the circuit board assembly 340 in an electrically isolated manner. As shown in the figures, the long segment guiding portion 620 may be configured to communicate with the circumferential surrounding portion 610 to receive the long segments 514, 524. More specifically, the long segment guiding portion 620 may include a first guide hole 621 and a second guide hole 622 that are separated from each other, each guide hole being formed by a peripheral wall surrounding, for receiving a portion of the first long segment 514 of the first pin 510 and a portion of the second long segment 524 of the second pin 520 respectively. The portion of the first long segment 514 and the portion of the second long segment 524 are, for example, clearance-fitted in the first guide hole 621 and the second guide hole 622 respectively. More specifically, the long segment guiding portion 620 may be arranged to extend beyond the cover 190 through a second cutout 195 (shown in fig. 23) in the cover 190 of the motor housing to enable the pins 510, 520 to connect, via their terminating ends 512, 522, to the circuit board assembly 340 located outside the motor housing.

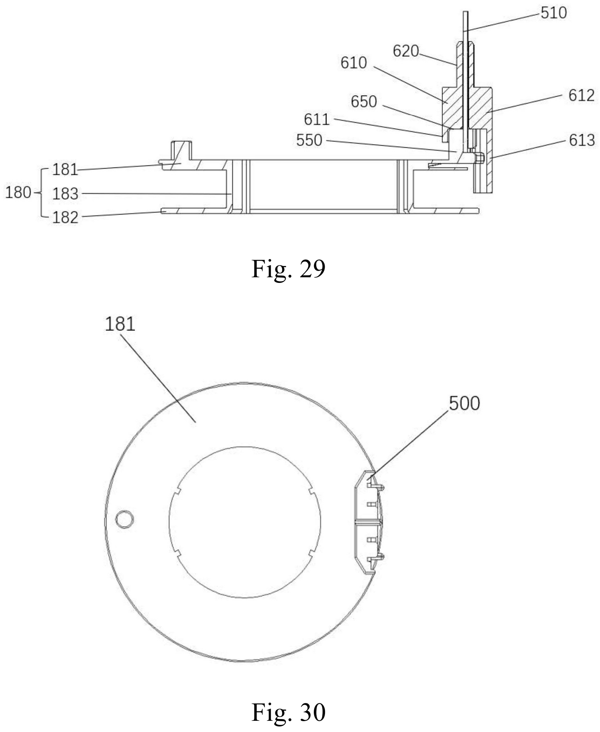

In a specific embodiment, as shown in figs. 29 and 32, the circumferential surrounding portion 610 of the sheath 600 is provided with a skirt 611 surrounding at least the upper portion of the terminal block 500, which can ensure that the circumferential surrounding portion 610, at its lower portion, completely surrounds the short segments 513, 523 and the connecting segments 515, 525 of the pins 510, 520. More specifically, as shown in the figures, the sheath 600 may also include a radially outer side wall 612 on its circumferential surrounding portion 610, and a partition wall 613 extending away from the lower portion of the outer side wall of the circumferential surrounding portion 610, the partition wall 613 and the radially outer side wall 612 being configured to abut against the inner side of the motor housing, more specifically the main housing 100, in the assembled state, thereby increasing the creepage distance between the pins 510, 520 and the motor housing and ensuring electrical safety.

In some embodiments, as shown in figs. 28, 29, and 30, the bobbin 180 of the coil assembly 120 may be configured to include axially spaced first and second annular end plates 181, 182 and a connecting shaft 183 therebetween. The terminal block 500 may be disposed on the peripheral portion of the first annular end plate 181 so that the terminal block 500 is located within the circumferential profile of the first annular end plate 181, as shown in fig. 30. This ensures radial compactness.

As described above, with reference to figs. 22 and 32, with the circuit board assembly 340 housed in the receiving box 300, the box body 310 of the receiving box 300, and more specifically the liner 330, is provided with a wire exit portion 350 configured to receive the upper end of the long segment guiding portion 620 of the sheath 600 while allowing the terminating ends 512, 522 of the pins 510, 520 to extend beyond the wire exit portion 350 to allow the terminating ends 510, 520 to be connected to the circuit board assembly 340. More specifically, the wire exit portion 350 may include a partition rib 353 configured to divide the wire exit portion 350 into two wire exit holes, namely, a first wire exit hole 351 and a second wire exit hole 352, the first wire exit hole 351 corresponding to the first guide hole 621 of the long segment guiding portion 620, and the second wire exit hole 352 corresponding to the second guide hole 622 of the long segment guiding portion 620. In addition, the possible fixing plate 170 and the cover 190 of the motor housing mentioned above are provided with through holes that form-fit with the long segment guiding portion 620 for it to pass through.

Therefore, the sheath 600 isolates the pins 510 and 520 from external structures, ensuring that the pins 510 and 520 do not contact any external metal structures, and ensuring safety performance. In a specific embodiment, referring to fig. 32, the sheath 600 first passes through the upper pole plate 130, then passes over the fixing plate 170, then passes through the cover 190 of the motor housing, and finally passes through the wire exit portion 350 on the liner 330, enters the inner cavity of the box body 310 and is electrically connected to the circuit board assembly 340. The wire exit portion 350 is provided with a partition rib 353, and the pins 510, 520 extend from either sides of the partition rib 353. The partition rib 353 can increase the creepage distance between the pins 510 and 520 and improve the safety of the circuit.

The exemplary implementation of the electric drive system proposed by the present disclosure have been described in detail above with reference to preferred embodiments. However, those skilled in the art can understand that, multiple changes and modifications can be made on the above specific embodiments without departing from the concept of the present disclosure, and various technical features and structures proposed by the present disclosure can be combined in various ways without departing from the protection scope of the present disclosure.

The scope of the present disclosure is defined not by the above-described embodiments, but by the appended claims and their equivalents.

## Claims

1. An electric drive system comprising:
a motor assembly comprising a motor housing, the motor assembly further comprising, disposed within the motor housing:
a rotatable magnetic rotor;
an upper pole plate provided with a plurality of upper pole claws;
a lower pole plate provided with a plurality of lower pole claws;
an upper magnetic isolation plate formed of a non-magnetic permeable material and disposed adjacent to the upper pole plate and between the upper pole plate and the lower pole plate;
a lower magnetic isolation plate formed of a non-magnetic permeable material and disposed adjacent to the lower pole plate and between the upper pole plate and the lower pole plate;
a coil assembly disposed between the upper pole plate and the lower pole plate;
a powertrain comprising:
a clutch gear train comprising a clutch disc and a clutch gear, the clutch disc being arranged to be associated with the magnetic rotor to be able to rotate when the magnetic rotor rotates, the clutch gear being configured to be movable between an extended position and a retracted position; wherein, in the extended position, the clutch gear is engaged with the clutch disc and, in the retracted position, the clutch gear is disengaged from the clutch disc;
a transmission gear train comprising an input gear arranged to mesh with the clutch gear and an intermediate output member configured for outputting power; and
a power output assembly coupled with the intermediate output member.

2. The electric drive system according to claim 1, wherein at least a portion of the transmission gear train and the clutch gear train is disposed within the motor housing.

3. The electric drive system according to claim 2, wherein the magnetic rotor comprises a rotor gear shaft, and the clutch disc is configured to mesh with the rotor gear shaft.

4. The electric drive system according to claim 3, wherein the motor housing comprises a main housing and a cover, and the motor assembly further comprises a fixing plate disposed in the motor housing, the fixing plate being configured to support the transmission gear train and the clutch gear train together with the cover, and the transmission gear train and the clutch gear train have a clearance with the fixing plate and with the cover, and the main housing comprises a positioning member configured to position the fixing plate.

5. The electric drive system according to claim 4, wherein the positioning member comprises a plurality of protrusions provided on a peripheral wall of the main housing, and respective upper ends of the plurality of protrusions are on a same plane parallel to the top face of the main housing, wherein the plurality of protrusions protrude from the peripheral wall of the main housing toward an interior of the main housing, wherein the upper pole plate is placed on the plurality of protrusions and abuts the respective upper ends of the plurality of protrusions, and the fixing plate is disposed on a side of the upper pole plate opposite to the upper magnetic isolation plate, wherein the upper magnetic isolation plate is configured to adhere to the upper pole plate; and/or the lower pole plate is a bottom plate of the main housing of the motor housing, and the lower magnetic isolation plate is disposed adhering to the bottom plate.

6. The electric drive system according to claim 4 or 5, wherein the electric drive system further comprises a receiving box, the receiving box comprises:
a box body, the box body comprising a box body outer shell made of metal material and a liner disposed inside the box body outer shell and made of insulating material; and
a box cover configured to cover an open end of the box body, the box cover comprising a box cover outer shell made of metal material and a lining cover disposed inside the box cover outer shell and made of insulating material.

7. The electric drive system according to claim 6, wherein the receiving box is configured to house at least a portion of the power output assembly;
wherein the powertrain comprises an electromagnet assembly comprising a movable core configured to move the clutch gear from the retracted position to the extended position upon energization of the electromagnet assembly, wherein the electromagnet assembly is housed in the receiving box;
wherein the clutch gear train further comprises an elastic return member configured to actuate return of the clutch gear from the extended position to the retracted position upon de-energization of the electromagnet assembly.

8. The electric drive system according to claim 7, wherein the first axial end face of the clutch disc is opposite to the first mating axial end face of the clutch gear, on the first axial end face are provided a first meshing tooth, and on the first mating axial end face are provided a second meshing tooth capable of meshing with the first meshing tooth.

9. The electric drive system according to claim 7, wherein the electric drive system comprises a circuit board assembly housed in the receiving box, the circuit board assembly configured to simultaneously transmit power to the motor assembly and the electromagnet assembly.

10. The electric drive system according to claim 9, wherein,
the box body is coupled with the cover of the motor housing;
the outer surface of the cover is provided with first flange structures protruding outwardly, and a bottom of the box body is provided with first receiving slots, each first receiving slot being configured to receive a corresponding first flange structure; and/or
the bottom of the box body is provided with second flange structures protruding outwardly, and the cover is provided with second receiving slots, each second receiving slot being configured to receive a corresponding second flange structure.

11. The electric drive system according to claim 10, wherein a bottom of the box body outer shell is provided with a cutout, and a bottom of the liner is provided with an axially extending supporting structure passing through the cutout, the axially extending supporting structure configured to abut an outer surface of the cover; and/or
wherein the cover is provided with a first relief hole corresponding to the clutch gear, and the bottom of the liner is provided with a limiting structure for the clutch gear; and/or
wherein relief holes for the intermediate output member to pass through are provided in the cover and in the respective bottoms of the box body outer shell and the liner.

12. The electric drive system according to any one of claims 1 to 5, wherein the upper magnetic isolation plate and the lower magnetic isolation plate are offset at an offset angle α in the circumferential direction, and the offset angle α satisfies α = 360°/n/2, where n is the number of pole pairs of the motor assembly, wherein the upper magnetic isolation plate and the lower magnetic isolation plate are configured to be consistent with each other in shape.

13. The electric drive system according to claim 6, wherein the electric drive system further comprises a damping mechanism comprising a damping gear arranged in mesh with the clutch gear and a damping block disposed on the damping gear, wherein the damping block is axially stacked over the damping gear, the damping block comprising a main body portion configured to be coupled with the damping gear via a shaft and two circumferentially extending damping arms, each damping arm being connected at one circumferential end with the main body portion, wherein the two damping arms are arranged centrally symmetrically with respect to a center of the shaft;
wherein the bottom of the liner is provided with an accommodation cavity for receiving the damping block.

14. The electric drive system according to any one of claims 1 to 3, **characterized in that**,
the coil assembly is disposed around the magnetic rotor and comprises a bobbin and a winding disposed on the bobbin, the bobbin is provided with a terminal block, and the terminal block is provided with two pin slots;
the electric drive system further comprises:
a circuit board assembly located outside the motor housing and configured to power the winding;
two pins, each pin configured to be inserted into a corresponding pin slot, each pin comprising a connecting end for electrical connection with the coil assembly and a terminating end for termination to the circuit board assembly; and
a sheath configured to cooperate with the terminal block to surround at least a portion of the pins.

15. The electric drive system according to claim 14, **characterized in that**,
each pin is configured to have two bending portions, such that the pin has a short segment, a long segment, and a connecting segment connecting the short segment and the long segment, the short segment comprises the connecting end, and the long segment comprises the terminating end;
each pin slot is configured to have a short segment receiving portion, a long segment receiving portion and a connecting receiving portion connecting the short segment receiving portion and the long segment receiving portion, and a first partition wall is provided between the short segment receiving portion and the long segment receiving portion;
wherein the short segment receiving portion is configured to receive the short segment, the long segment receiving portion is configured to receive the long segment, and the connecting receiving portion is configured to receive the connecting segment.

16. The electric drive system according to claim 15, **characterized in that**,
the motor housing comprises a cover;
the sheath is provided with:
a circumferential surrounding portion configured to surround the short segment and a portion of the long segment of the two pins, and the circumferential surrounding portion is provided with a mounting surface for abutting the upper end face of the terminal block; and
a long segment guiding portion configured to communicate with the circumferential surrounding portion and comprising two guide holes spaced apart from each other for receiving a portion of the long segments respectively;
wherein the long segment guiding portion is configured to extend out of the cover through a cutout in the cover.

17. The electric drive system according to claim 16, **characterized in that**,
the circumferential surrounding portion is provided with a skirt surrounding at least an upper portion of the terminal block; and/or
the sheath further comprises a partition wall extending from a lower portion of the radially outer side wall of the circumferential surrounding portion, the partition wall and the radially outer side wall being configured to abut against an inner side of the motor housing; and/or
the bobbin comprises a first annular end plate and a second annular end plate axially spaced apart, the terminal block being disposed at a peripheral portion of the first annular end plate such that the terminal block is within a circumferential profile of the first annular end plate.

18. The electric drive system according to claim 16 or 17, **characterized in that**,
the electric drive system further comprises a receiving box in which the circuit board assembly is housed;
the receiving box comprises a box body and a box cover configured to cover an open end of the box body;
the box body is connected to the cover of the motor housing, and the box body is provided with a wire exit portion, the wire exit portion is configured to receive an upper end of the long segment guiding portion of the sheath, and the terminating end is arranged to extend out of the wire exit portion.

19. The electric drive system according to claim 18, **characterized in that** the wire exit portion comprises a partition rib configured to divide the wire exit portion into two wire exit holes, and each wire exit hole corresponds to a corresponding guide hole.

20. A fluid control system comprising a valve and the electric drive system according to any one of claims 1 to 19 for driving the valve.
